(19) Europäisches Patentamt
European Patent Office
Office européen des brevets

(11) Publication number: 0 231 361 B1

(12) **EUROPEAN PATENT SPECIFICATION**

(45) Date of publication of patent specification: 20.06.90

(51) Int. Cl.$^5$: C 08 G 73/10, C 08 L 79/08, C 08 L 71/00, C 08 L 75/00

(21) Application number: 86905090.6

(22) Date of filing: 30.07.86

(86) International application number: PCT/US86/01623

(87) International publication number: WO 87/00845 12.02.87 Gazette 87/04

# (54) POLYIMIDE - POLY ( ARYLKETONE ) BLENDS.

(30) Priority: 30.07.85 US 760592

(43) Date of publication of application: 12.08.87 Bulletin 87/33

(45) Publication of the grant of the patent: 20.06.90 Bulletin 90/25

(84) Designated Contracting States: DE FR GB IT NL

(56) References cited:
EP-A-0 163 464
EP-A-0 163 518

(73) Proprietor: AMOCO CORPORATION
200 East Randolph Drive P.O. Box 5910-A
Chicago Illinois 60680 (US)

(72) Inventor: CLIFFTON, Michael, Duane
205 Birchview Drive
Piscataway, NJ 08854 (US)
Inventor: HARRIS, James, Elmer
211 Birchview Drive
Piscataway, NJ 08854 (US)

(74) Representative: Laredo, Jack Joseph et al
Elkington and Fife Beacon House 113 Kingsway
London, WC2B 6PP (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 231 361 B1

Courier Press, Leamington Spa, England.

## Description

Field of the Invention

This invention is directed to blends of poly(aryl ether ketones) with polyimides possessing excellent mechanical properties and thermal stability; the polyimides are also soluble in aprotic solvents and display the features of being miscible with aromatic poly(ether ketones).

Background of the Invention

Aromatic polyimides have been known since the early 1960's. These polyimides are tough, very high temperature resistant polymers which find use in a wide variety of commercial applications. Several reviews on polyimides have been published, see for example, Cotter et al, Ring-Forming Polymerizations, Vol. B.2., pp. 1—67, Academic Press, New York, 1972.

Polyimides are generally prepared by the condensation of a diamine with a tetracarboxylic acid dianhydride. U.S. Patent Nos. 3,179,633, and 3,179,634 disclose a two-step process for producing polyimides which comprises: first the reaction of a diamine with a dianhydride in a polar solvent to yield a poly(amide-acid) composition; and second, heating the poly(amide-acid) to a high temperature which results in the conversion of the poly(amide-acid) into the corresponding polyimide. The intermediate poly(amide-acid) is formed into a shaped article prior to the second step. An alternative to the above-described thermal cyclization is the chemical imidization as described in for example, U.S. Patent No. 3,420,795. In the latter case cyclization of the poly(amide-acid) is performed in solution, in a polar solvent, using a dehydrating agent such as, for example, the combination of acetic anhydride/pyridine. Another method of preparing polyimides is the reaction of a diisocyanate with a dianhydride. This reaction can be carried out in the presence of select catalysts as described in U.S. Patent No. 4,421,905, or in the absence of catalysts — see Ghatge et al., Journal of Polymer Science, Polymer Chemistry Edition, Vol. 18, pp. 1905—1909 (1980). In both instances polar organic solvents are preferably utilized in the above condensation.

A number of polyimides utilizing a variety of dianhydrides and diamines were prepared over the last two decades. It is remarkable, however, that only a few selected structures, such as those described herein were found to be miscible with poly aryl ether ketones. It is to be noted that two closely related polymers, i.e. polyimides (1) and (2)

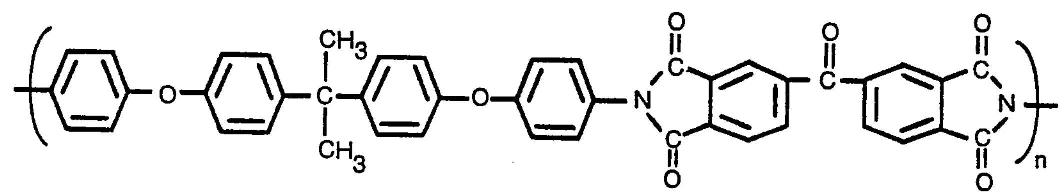

(1)

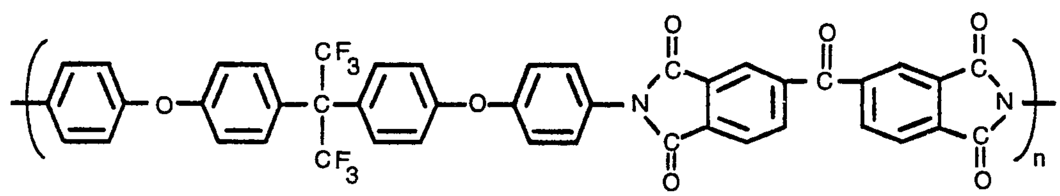

(2)

are also miscible with poly(aryl ether ketones). Both are disclosed in the prior art — see Koton et al., Vysokomolekulyarnye Soedinienia Vol *B25*, pp. 248—7 (1983) and U.S. Patent No. 4,111,906. However, the miscibility of the polymers (1) and (2) with poly(aryl ether ketones) was not recognized in the above-cited publications.

EP—A2—0 163 528 discloses inter alia polyimides derived from an aromatic dianhydride containing groups $Ar_1$ and $AR_2$ with similar definitions to the corresponding groups of the presently claimed compounds. Specifically, Examples 2 and 15 of this reference describes the preparation of such a polyimide while Example 3 describes a similar polyimide wherein 50% of the diamine is a different diamine. Example 10 describes a polyimide similar to that of Example 2.

EP—A2—0 163 464 discloses blends of polyaryletherketones with polyetherimides preferably derived from the dianhydride of 2,2-bis(diphenylether)propane and phenylene diamine.

The Invention

The present invention is directed to blends of a select group of polyimide polymers that display excellent mechanical properties and thermal stability with aromatic poly(aryl ether ketones).

The polyimides of the instant invention are derived from the following diamine (3)

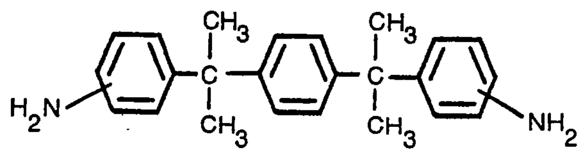

(3)

wherein the amino functions can be located independently in both the *para* and the *meta* position with respect to the isopropylidene radical, and the dianhydrides (4)—(7). Copolyimides in which two or more of the dianhydrides are employed in conjunction with (3), or where several isomers of (3) are used with either one or several of the dianhydrides are also included herein.

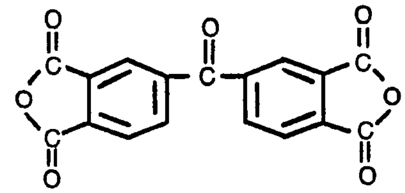

(4)

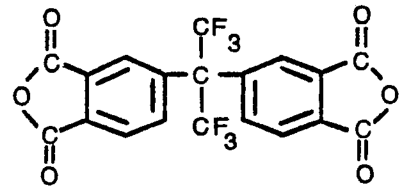

(5)

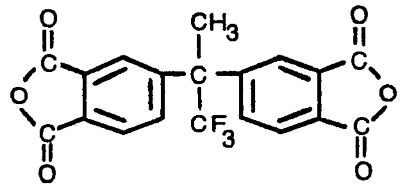

(6)

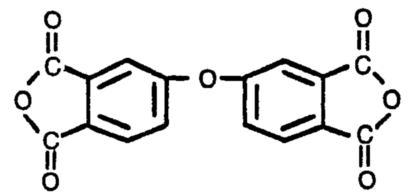

(7)

In addition, up to 50 mole percent of the diamine (3) can be replaced by one or several of the following diamines (8)—(11).

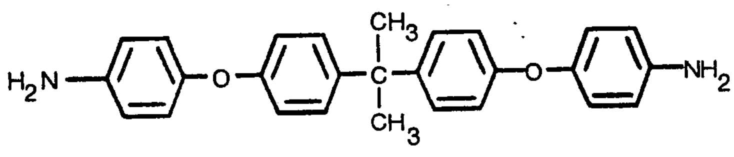

(8)

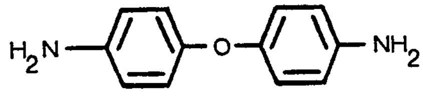

(9)

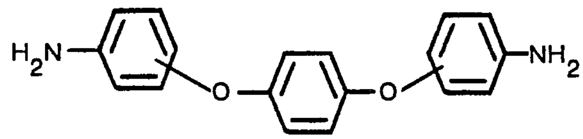

(10)

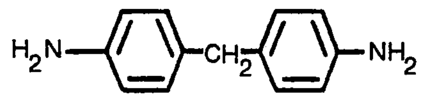

(11)

The homopolymers derived from either the *para* or *meta* disubstituted diamine (3) and the dianhydrides (4)—(7) are preferred. The polyimide containing dianhydride (4) is most preferred.

As stated, the polyimides possess excellent mechanical and thermal properties. The polyimides are soluble in polar solvents such as N-methylpyrolidone, N,N-dimethylacetamide, and the like. Shaped articles can be fabricated from the polyimides by solution casting techniques and by compression molding. Most importantly, however, the polymers display the unique property of being miscible with poly(aryl ether ketones).

The poly(aryl ether ketones) with which the polyimides form the miscible blends of the instant invention are crystalline materials which can be generically characterized as containing repeating units of one or more of the following formulae:

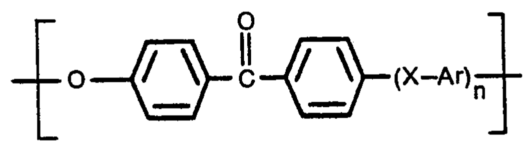

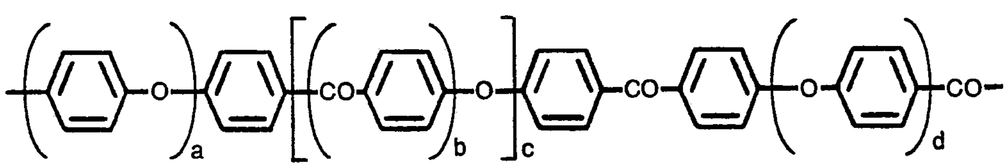

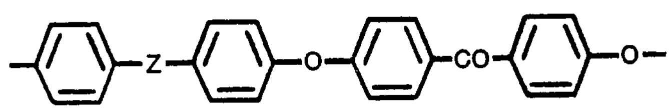

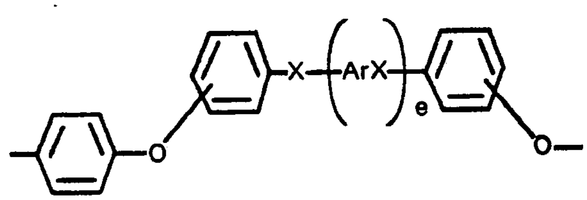

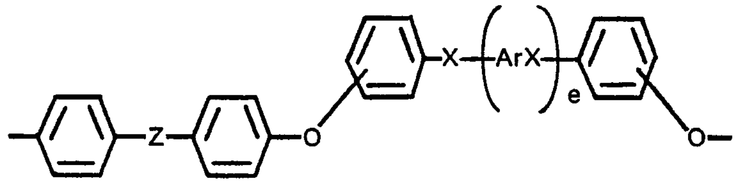

wherein Ar is independently a divalent aromatic radical selected from phenylene, biphenylene or naphthylene, X is independently O, C, or a direct bond and n is an integer of from 0 to 3; b, c, d and e are 0 to 1, and a is an integer of 1 to 4, and preferably d is 0 when b is 1 and Z is ether, carbonyl or

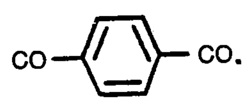

Preferred poly(aryl ketone)s include those having repeating units of the formula:

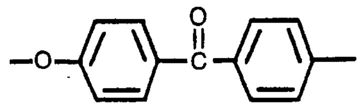

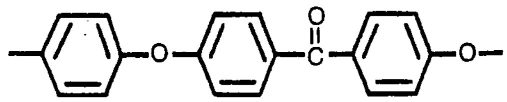

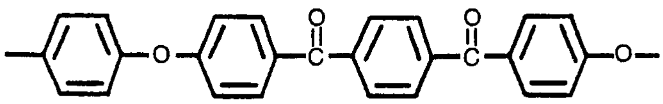

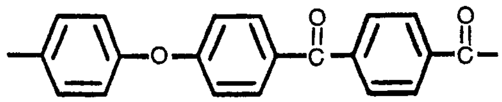

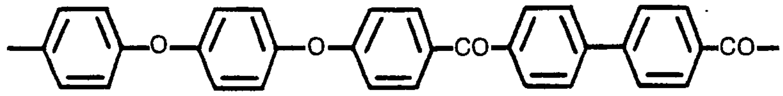

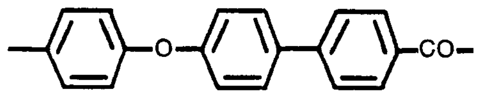

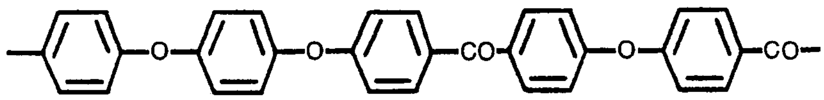

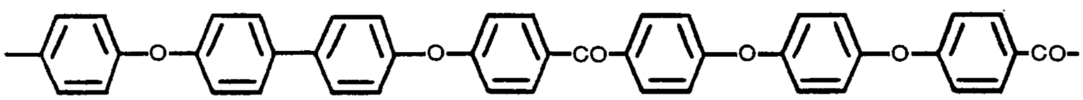

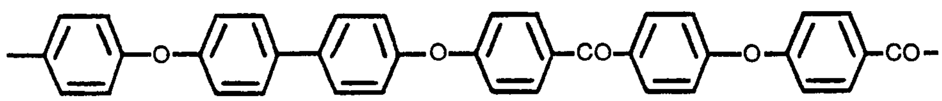

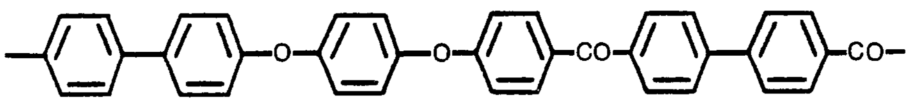

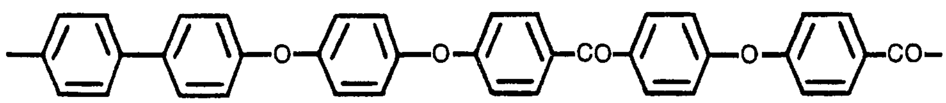

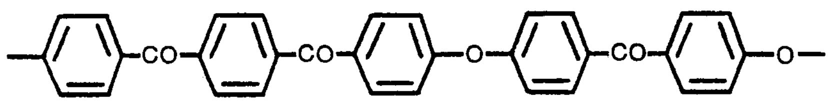

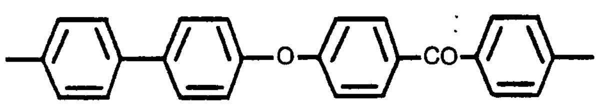

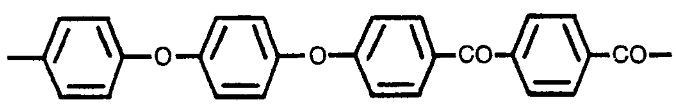

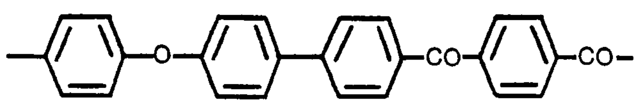

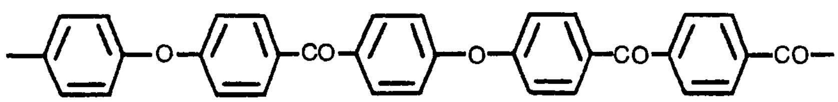

The polyimides used in the present invention are preferably prepared by the reaction of the appropriate dianhydride or dianhydrides with the appropriate diamine(s) followed by chemical dehydration of the intermediate poly(amide-acid). The sequence is illustrated in equation (I) where $Ar_1$ is the tetravalent residuum

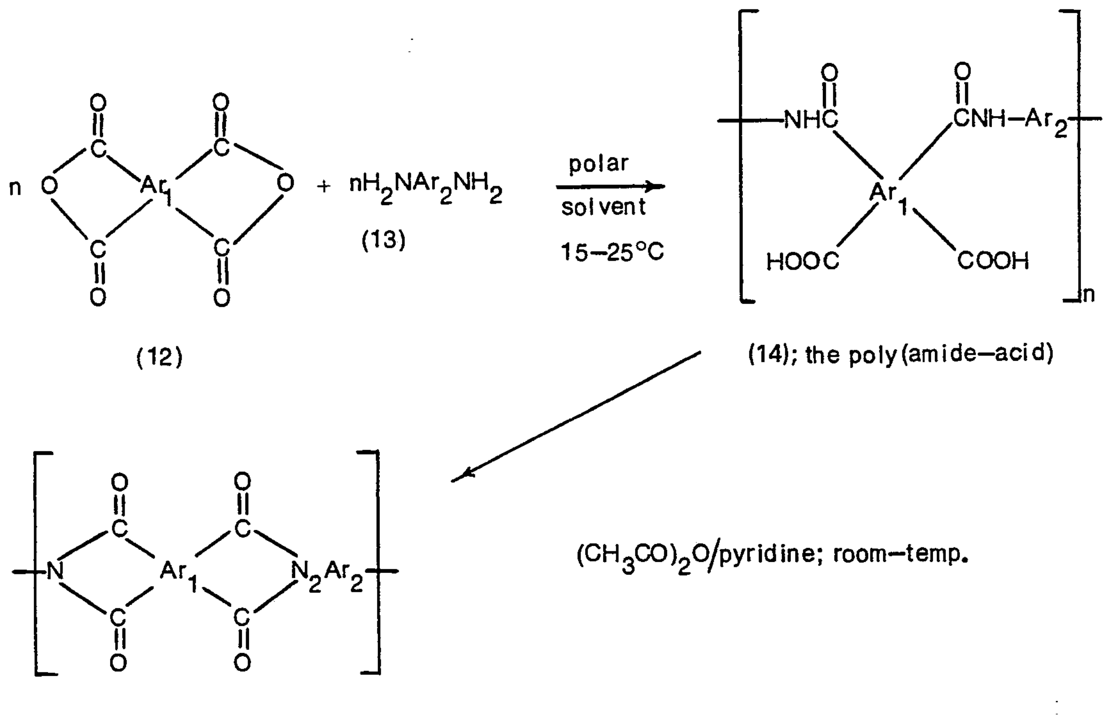


(12)

(13)

(14); the poly(amide—acid)

(15); Final Polyimide

of any of the dianhydrides (4)—(7) and $Ar_2$ is the divalent residuum of any of the diamines (3), (8), (9), (10), and (11).

The solvents useful in the solution polymerization process for synthesizing the polyamide-acid compositions are the organic solvents whose functional groups do not react with either of the reactants (the diamines or the dianhydrides) to any appreciable extent. In addition to being inert to the system, and preferably, being a solvent for the polyamide-acid, the organic solvent must be a solvent for at least one of the reactants, preferably for both of the reactants. Stated another way, the organic solvent is an organic liquid other than either reactant or homologs of the reactants that is a solvent for at least 1 reactant, and contains functional groups, the functional groups being groups other than monofunctional primary and secondary amino groups and other than the monofunctional dicarboxyl-anhydro groups. The normally liquid organic solvents of the N,N-dialkylcarboxylamide class are useful as solvents in the process. The preferred solvents are the lower molecular weight members of this class, particularly N,N-dimethylformamide and N,N-dimethylacetamide. Other useful solvents are: N,N-diethylformamide, N,N-diethylacetamide, N,N-dimethylmethoxyacetamide, N-methyl caprolactam, and the like. Other solvents which may be used include dimethylsulfoxide, N-methyl-2-pyrrolidone, tetramethyl urea, pyridine, dimethylsulfone, hexamethylphosphoramide, tetramethylene sulfone, formamide, N-methylformamide and butyrolactone. The solvents can be used alone, in combinations of solvents, or in combination with poorer solvents such as benzene, benzonitrile, dioxane, xylene, toluene and cyclohexane.

Furthermore, in determining a specific time and a specific temperature for forming the poly(amide-acid) of a specified diamine and a specified dianhydride, several factors must be considered. The maximum permissible temperature will depend upon the diamine used, the dianhydride used, the particular solvent, the percentage of poly(amide-acid) desired in the final composition and the minimum period of time that is desired for the reaction. For most combinations of diamines and dianhydrides falling within the definitions given above, it is possible to form compositions of 100% poly(amide-acid) by conducting the reaction below 100°C. However, temperatures up to 175°C may be tolerated to provide shapeable compositions. The particular temperature below 175°C that must not be exceeded for any particular combination of diamine, dianhydride, solvent and reaction time to provide a reaction product composed by the desired minimum of poly(amide-acid) will vary but can be determined by a simple test by any person of ordinary skill in the art. However, to obtain the maximum inherent viscosity, i.e., maximum degree of polymerization, for any particular combination of diamine, dianhydride, solvent etc., and thus produce ultimately shaped articles such as films and filaments of optimum toughness, it has been found that the temperature throughout the reaction should be maintained below 60°C, preferably below 50°C.

The degree of polymerization of the poly(amide-acid) is subject to deliberate control. The use of equal molar amounts of the reactants under the prescribed conditions provides poly(amide-acids) of very high molecular weight. The use of either reactant in large excess limits the extent of polymerization. In addition to using an excess of one reactant to limit the molecular weight of the poly(amide-acid), a chain terminating agent such as phthalic anhydride may be used to "cap" the ends of the polymer chains. Typical useful capping agents are monoanhydrides or monoamines such as phthalic anhydride, aniline, p-methylaniline, and the amine (16) and anhydride (17) shown below:

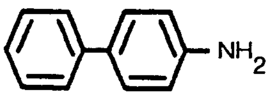

(16)

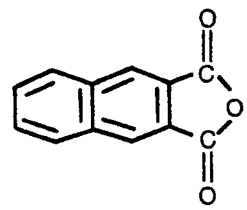

(17)

In the preparation of the poly(amide-acid), it is desired that the molecular weight be such that the inherent viscosity of the polymer is at least 0.1, preferably 0.3—1.5. The inherent viscosity is measured at 25°C at a concentration of 0.5% by weight of the polymer in a suitable solvent such as N-methylpyrolidone.

The quantity of organic solvent used in the process need only be sufficient to dissolve enough of one reactant, preferably the diamine, to initiate the reaction of the diamine and the dianhydride. It has been found that the most successful results are obtained when the solvent represents at least 60% of the final solution. That is, the solution should contain 0.05—40% of the polymeric component.

The second step of the process described in equation (I) is preformed by treating the poly(amide-acid) (14) with a dehydrating agent alone or in combination with a tertiary amine such as acetic anhydride or an acetic anhydride-pyridine mixture. The ratio of acetic anhydride to pyridine can vary from just above zero to infinite mixtures.

In addition, to acetic anhydride, lower fatty acid anhydrides and aromatic monobasic acid anhydrides may be used. The lower fatty acid anhydrides include propionic, butyric, valeric, mixed anhydrides of these with one another and with anhydrides of aromatic monocarboxylic acids such as benzoic acid, naphthoic acid, etc., and with anhydrides of carbonic and formic acids, as well as aliphatic ketenes (ketene and dimethyl ketene). The preferred fatty acid anhydrides are acetic anhydride and ketene. Ketenes are regarded as anhydrides of carboxylic acids (ref. Bernthsen-Sudborough, textbook of Organic Chemistry. Van Nostrand 1935, p. 861 and Hackh's Chemical Dicitionary, Blakiston 1953, p. 468) derived from drastic dehydration of the acids.

The aromatic monobasic acid anhydrides include the anhydride of benzoic acid and those of the following acids: o-, m- and p-toluic acids; m- and p-ethyl benzoic acids; p-propyl benzoic acid; p-isopropyl benzoic acid; anisic acid; o-, m- and p-nitro benzoic acids; o-, m- and p-halo benzoic acids; the various dibromo and dichloro benzoic acids; the tribromo and trichloro benzoic acids; isomeric dimethyl benzoic acids, e.g. hemellitic, 3,4-xylic, isoxylic and mesitylenic acids; veratic acid, trimethoxy benzoic acid; alpha- and beta-naphthoic acids; and biphenylcarboxylic (i.e. p-phenyl benzoic) acid; mixed anhydrides of the foregoing with one another and with anhydrides of aliphatic monocarboxylic acids, e.g. acetic acid, propionic acid, etc., and with anhydrides of carbonic and formic acids.

Tertiary amines having approximately the same activity as the prepared pyridine can be used in the process. These include isoquinoline, 3,4-lutidine, 3,5-hutidine, 4-methyl pyridine, 3-methyl pyridine, 4-isopropyl pyridine, N-dimethyl benzyl amine, 4-benzyl pyridine, and N-dimethyl dodecyl amine. These amines are generally used from 0.3 to equimolar amounts with that of the anhydride converting agent. Trimethyl amine and triethylene diamines are much more reactive, and therefore are generally used in still smaller amounts. On the other hand, the following operable amines are less reactive than pyridine: 2-ethylpyridine, 2-methyl pyridine, triethyl amine, N-ethyl morpholine, N-methyl morpholine, diethyl cyclohexylamine, N,N-dimethyl cyclohexylamine, 4-benzoyl pyridine, 2,4-lutidine, 2,6-lutidine and 2,4,6-collidine, and are generally used in larger amounts.

An alternative method for the preparation of the polyimides is the thermal dehydration of the intermediate poly(amide-acid)(14). This transformation is generally performed in bulk, preferably using a shaped article, e.g. film or filament of the polymeric acid. The dehydration is conducted stepwise starting at temperatures of about 100°C and increasing the temperatures progressively to about 300°C or even higher, depending on the particular case, towards the end of the imidization step. The reaction is preferably performed under an inert atmosphere; atmospheric or reduced pressures can be employed.

The polyimides can also be prepared by the interaction of the dianhydride with a diisocyanate as shown in equation (II):

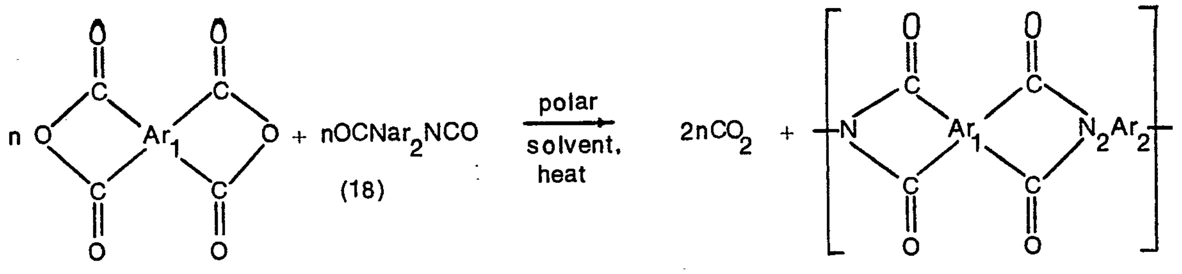


(18)

(II)

(12) (15)

wherein Ar and $Ar_2$ are as defined above.

The polyimide forming reactions are conducted in a nitrogen-containing solvent. The specific solvent will depend on the particular aromatic polyimide used. In most cases the solvent is an aprotic organic compound having a dielectric contant between 35 and 45, preferably one which is water soluble. Representative aprotic compounds are N-N-dimethylformamide, N,N-diethylformamide, N,N-dimethyl-methoxyacetamide, N-methyl caprolactam, caprolactam, N,N-dimethylacetamide, N,N-diethylacetamide, dimethyl sulfoxide, N-methylpyrrolidone, tetramethylurea, hexamethylphosphoramide, N,N,N',N'-tetra-methylethylmalonamide, N,N,N',N'-tetramethylglutaramide, N,N,N',N'-tetramethylsuccinamide, thiobis(N,N-dimethylcarbamylmethyl) ether, N,N,N',N'-tetramethylfuraramide, methylsuccinonitrile, N,N-dimethylcyanocetamide, N,N-dimethyl-alpha-cyanopropionamide, N-formylpiperidine and butyrol-acetone, etc. Preferred solvents are dimethylformamide, dimethylacetamide, N-methyl-pyrrolidone and caprolactam.

The reaction temperature is within the range of about 50°C to about 200°C, and preferably, from about 100°C to about 150°C. The polymerization may be performed in the presence or in the absence of a catalyst. Advantageously, the reaction is carried out in the presence of a catalyst for the reaction of an isocyanate and a carboxylic acid and/or anhydride group. Such catalysts are well known in the art; as described in, for example, U.S. Pat. No. 3,701,756. Illustrative catalysts include the alkali metal salts of lactams such as sodium, potassium and lithium butyrolactamates, sodium, potassium and lithium valerolactamates, sodium, potassium and lithium caprolactamates, alkali metal alkoxides and aryloxides such as sodium, potassium and lithium methoxides, ethoxides, butoxides and phenoxides, and the like.

The reaction between the diisocyanate and the dianhydride is carried out under substantially anhydrous conditions and the progress of the reaction can be followed by any of the routine analytical techniques such as following the viscosity increase of the reaction solution or the evolution of carbon dioxide. The polyimides produced by the reaction remain in solution and can be used as such or can be precipitated therefrom by addition of an appropriate liquid in which the polyimide is insoluble or has low solubility.

Other useful reaction catalysts are the metal acetylacetonates which are described in, for example, U.S. Patent No. 4,421,905. The catalysts

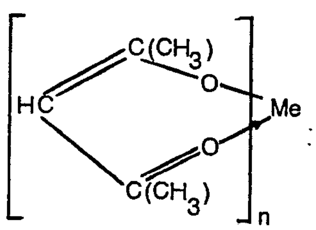

have the formula when Me is Al, Co, Fe and Ni, n has a value of 3, and when Me is Zr, n has a value of 4.

The acetylacetonate-promoted reaction is advantageously conducted at a temperature in the range of about 70° to 150°C, preferably in the range of about 100° to 140°C. When the temperature is in the upper portion of these ranges, the imidization reaction is substantially completed in 2 to 4 hours.

The metal acetylacetonate is advantageously used in an amount of at least 0.005 gm, preferably at least 0.01 gm per equivalent weight of dianhydride and generally there is no need to exceed 1 gm of metal acetylacetonate to obtain the desired results. Advantageously the metal acetylacetonate is used in an amount of 0.005 to 1 gm of metal acetylacetonate, preferably 0.01 to 0.05 gm per gm of aromatic dianhydride.

Better thermal stability is achieved by capping the polyimides with either a monoanhydride or a monoisocyanate. Typical capping reagents are phthalic anhydride, phenyl isocyanate, p-methylphenyl isocyanate, the isocyanate (18), and the anhydride (19).

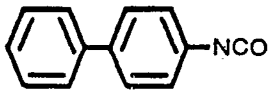

(18)

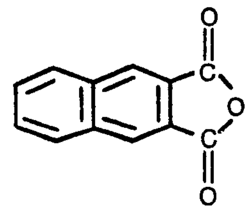

(19)

The polyimides used in this invention are solid materials having number average molecular weights of at least 5,000 and preferably in the range of 8,000 to 50,000. Reduced viscosities of the polymers as measured in N-methylpyrolidone at concentrations of 0.5% by weight and at 25°C are at least 0.1 dl/gm and preferably in the range of 0.3 up to 1.5 dl/gm and higher.

The polymers used in this invention may include mineral fillers such as carbonates including chalk, calcite and dolomite; silicates including mica, talc, wollastonite; silicon dioxide; glass spheres; glass powders; aluminum; clay; quartz; and the like. Also, reinforcing fibers such as fiberglass, carbon fibers, and the like may be used. The polymers may also include additives such as titanium dioxide; thermal stabilizers, ultraviolet light stabilizers, plasticizers, and the like.

The polymers used in ths invention may be fabricated into any desired shape, i.e. moldings, coatings, films, or fibers. They are particularly desirable for use as electrical insulation for electrical conductors.

Also, the polymers may be woven into monofilament threads which are then formed into industrial fabrics by methods well known in the art as exemplified by U.S. Patent 4,359,501. Further, the polymers may be used to mold gears, bearings and the like.

## Examples

The following examples serve to give specific illustrations of the practice of this invention but they are not intended in anyway to limit the scope of this invention:

### Preparation of Polyimides

The poly(imides) were prepared by the following method. To a 500 ml round bottom flask, fitted with a thermometer and mechanical stirrer, was added (0.050 moles) of the diamine and 100 g of dimethyl acetamide. The solution was stirred and cooled in an icebath to 10—15°C. Following addition of 16.11 g (0.050 moles) of benzophenone tetracarboxylic acid dianhydride and 10.0 g of dimethyl acetamide, the amber colored solution was stirred for three hours at 20 to 23°C. The solution was then diluted with 200 ml of dimethyl acetamide. Imidization was accomplished by adding 11.85 g (0.15 moles) of acetic anhydride to the solution and stirring overnight at room temperature. The following day, the contents of the flask were coagulated in deionized water, rinsed twice with acetone and dried in a vacuum oven at 80°C.

The polyimide from benzophenone tetracarboxylic dianhydride and the diamine (20)

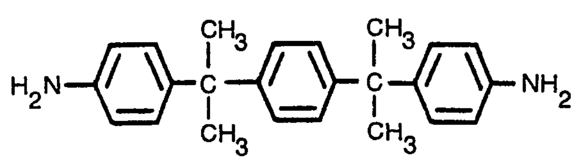

(20)

was compression molded in a 10.16 × 10.16 × 0.005 cm (4 × 4 × 0.020 inch) cavity mold at about 380°C in a South Bend hydraulic press. The sample was cooled while in the press by passing water through cooling channels within the platens. Cooling from 380°C to room temperature took about 10 minutes. 3.175 mm (one-eight inch) strips were shear cut from the molded product. These strips were tested for 1% secant modulus according to a procedure similar to ASTM D-638, tensile strength and elongation at break according to ASTM D-638, and pendulum impact strength. Pendulum impact strength is measured as follows: A steel pendulum is used, cylindrical in shape with a diameter of 2.11 cm, (0.83 inch) and weighing 0.709 kg (1.562 pounds); the striking piece, mounted almost at the top of the pendulum in a cylinder 0.762 cm (0.3 inch in diameter; film specimens 10.16 cm (4 inches) long, 0.3175 cm (0.125 inch) wide and about 0.0254 to 0.702 mm (1 to 30 mils) thick, are clamped between the jaws of the tester so that the jaws are spaced 2.54 cm (1 inch) apart; 0.3175 cm (0.125 inch) width of the film is mounted vertically; the pendulum is raised to a constant height to deliver 0.156 kg m (1.13 foot pounds) at the specimen; when the pendulum is released the cylindrical striking piece hits the specimen with its flat end, breaks the film, and travels to a measured height beyond; the difference in the recovery height (i.e. the difference in the potential energy of the pendulum at the maximum point of the upswing) represents the energy absorbed by the specimen during the rupture; the impact strength, expressed in kgm per 16.4 $cm^3$ (foot-pounds per cubic inch), is obtained by dividing the pendulum energy loss by the volume of the specimen.

In order to measure stress crack resistance, samples were placed under stress and a cotton swab saturated with a stress cracking agent was attached to the center of the specimen. The time for the specimen to rupture was then recorded, the longer this time, the higher the stress-crack resistance.

The glass transition temperature (Tg) of the molded plaque was measured by two methods. The modulus resilience method as described by Olabisi, et al., in Polymer-Polymer Miscibility, Academic Press, N.Y., p. 126, was used to determine the Tg of the as molded plaque at a heating rate of 1.6°C/min. The Tg was also determined by placing the sample in an aluminum DSC pan and heating it to 400°C for one minute in the barrel of a Tinius-Olsen Extrusion Plastometer. The sample was then quenched rapidly to room temperature by bringing it in contact with a large metal block. The quenching process took 1 to 2 seconds. The sample was then placed in a DuPont® 1090 thermal analyzer equipped with a dual DSC sample cell and the Tg determined by methods well known in the field of polymer science, by heating at 10°K/min.

Properties of the polyimide from benzophenone tetracarboxylic acid dianhydride and diamine (20) are as follows: .

TABLE

| | | |
|---|---|---|
| 1% Secant Modulus (ksi) | 299 | |
| Tensile Strength (psi) (kPa) | 14,500 | 99977.5 |
| Elongation at Break | 11 | |
| Pendulum Impact Strength (ft-lb/in$^3$) (kgm/cm$^3$) | 66 | 149.25 |
| TG (mechanical) (°C) | 265 | |
| Tg (DSC) (°C) | 263 | |
| Time to Rupture (hr) at 6894 kPa (1000 psi) Tensile Strength | | |
| Methylene Chloride | 0.48 | |
| Trichloroethylene | 2.1 | |

**Claims**

1. A miscible blend of a poly(aryl ether ketone) and a polyimide of the following formula:

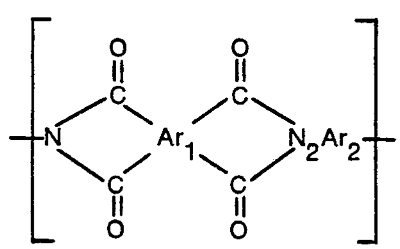

wherein $Ar_1$ is the tetravalent residuum of any of the following dianhydrides:

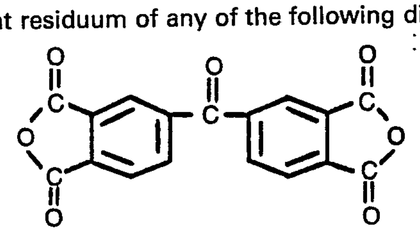

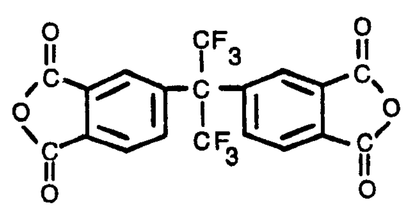

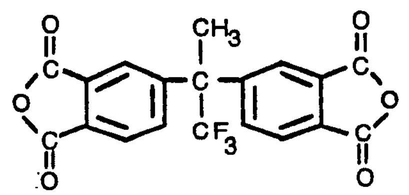

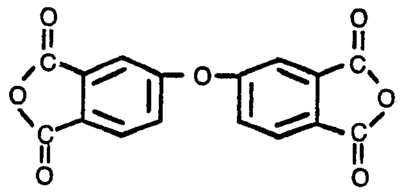

and $Ar_2$ is the divalent residuum of the following diamine:

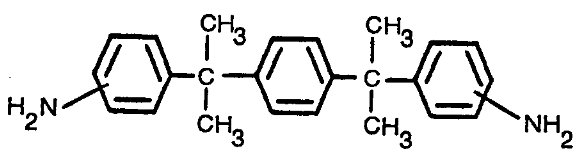

and optionally, with one or more of the following diamines:

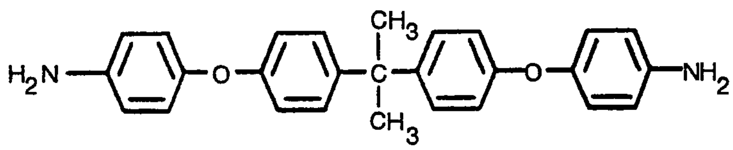

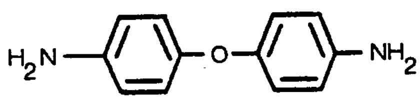

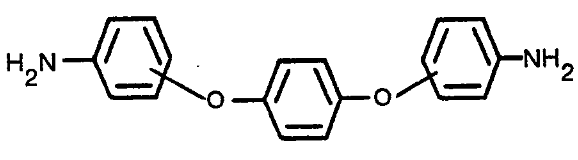

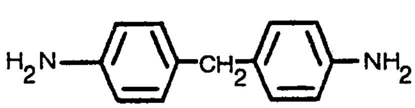

2. A blend as defined in Claim 1, wherein $Ar_2$ is the divalent residuum of the following diamine:

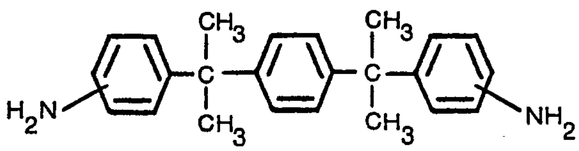

3. A blend as defined in Claim 2, wherein up to 50 mole percent of the diamine is replaced by the divalent residuum, of the following diamines:

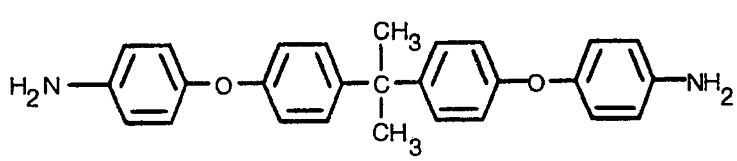

4. A blend as defined in claim 1 wherein the poly(aryl ether ketone) contains repeating units of one or more of the following formulae:

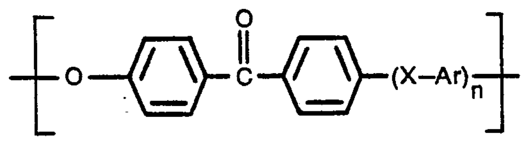

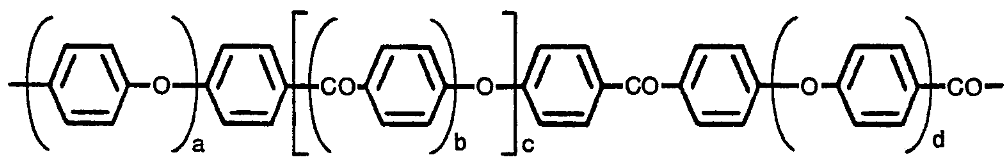

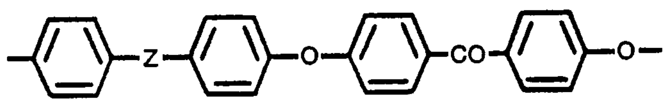

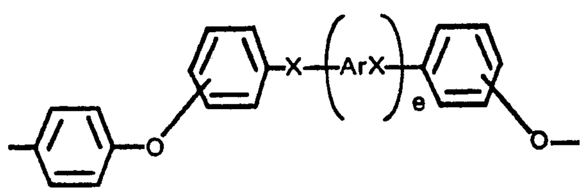

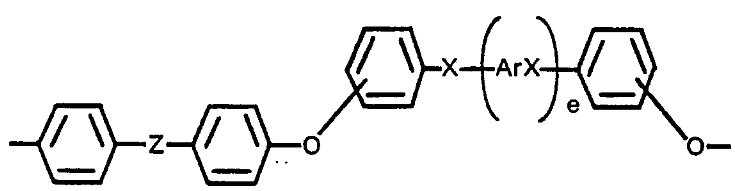

wherein Ar is independently a divalent aromatic radical selected from phenylene, diphenylene or naphthylene, X is independently O, C or a direct bond and n is an integer of from 0 to 3, b, c, d and e are 0 or 1 and a is an integer of 1 to 4 and Z is ether, carbonyl or

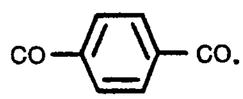

5. A blend as defined in Claim 4, wherein the poly(aryl ether ketone) contains repeating units selected from one or more of the following:

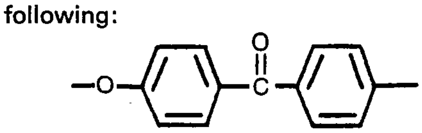

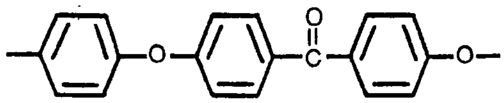

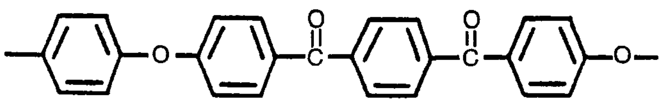

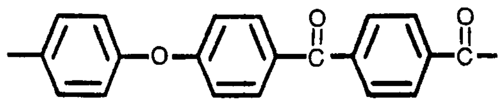

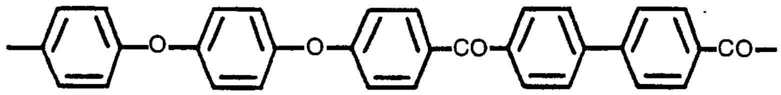

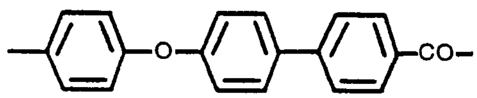

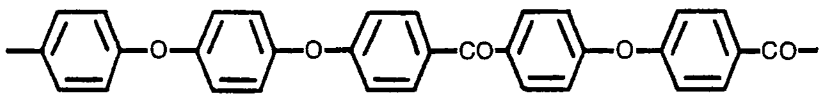

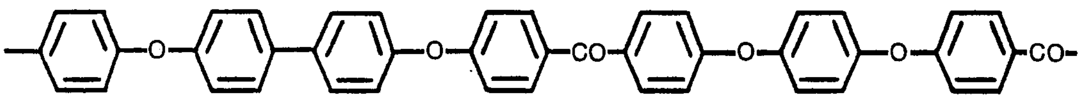

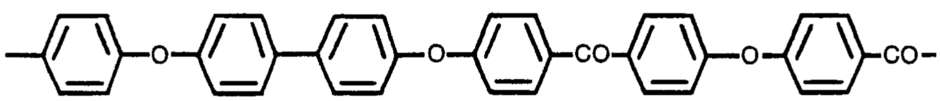

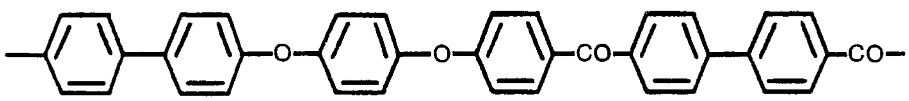

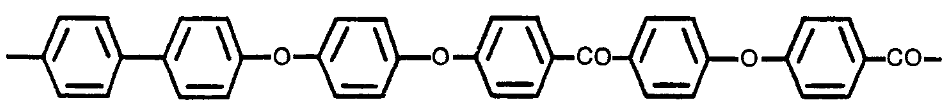

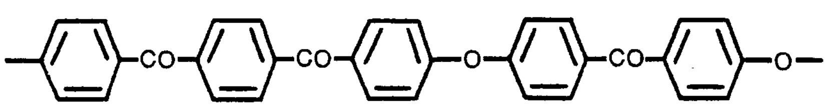

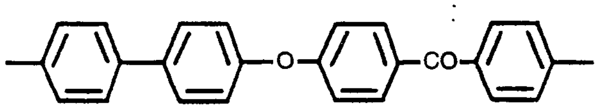

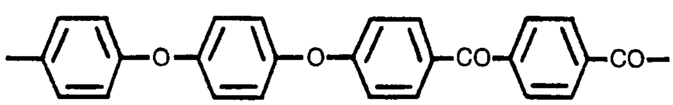

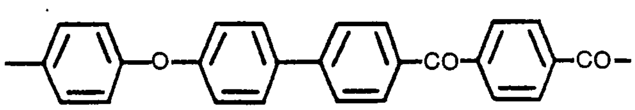

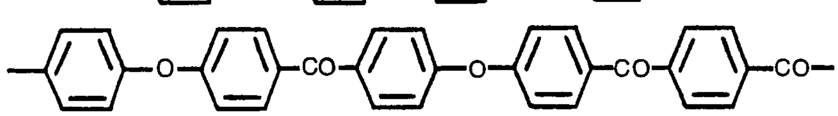

**Patentansprüche**

1. Mischbares Gemisch eines Poly(aryletherketons) und eines Polyimids der folgenden Formel

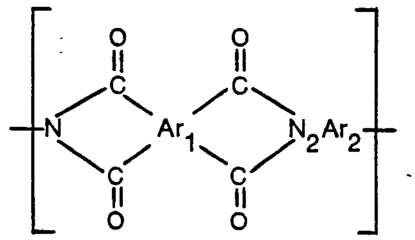

worin $Ar_1$ den vierwertigen Rest eines der folgenden Dianhydride wiedergibt

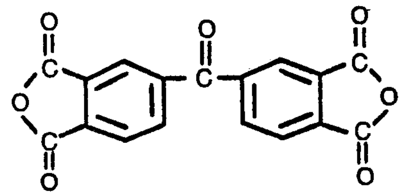

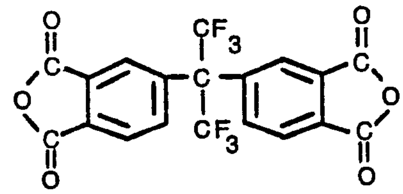

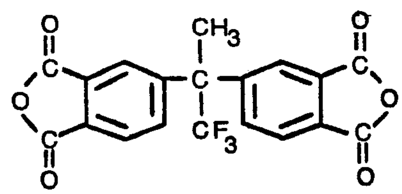

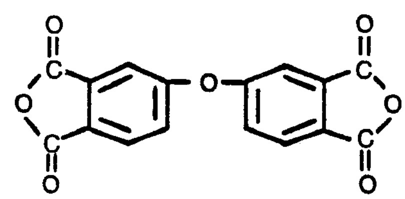

und $Ar_2$ für den zweiwertigen Rest des folgenden Diamins steht :

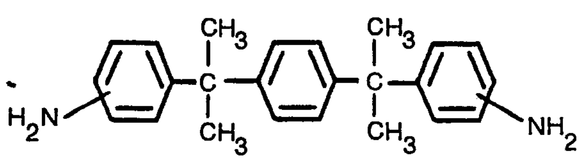

und gegebenenfalls mit einem oder mehreren der folgenden Diamine

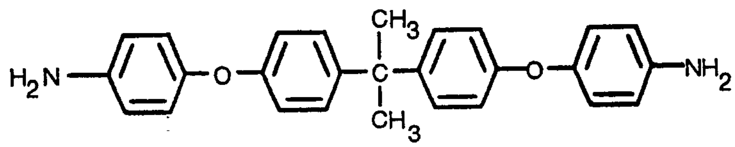

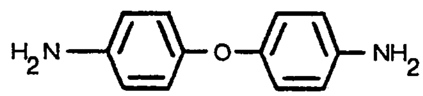

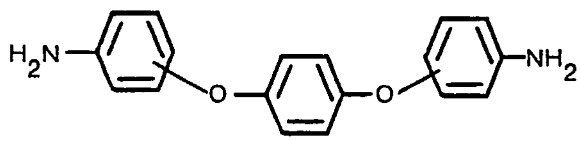

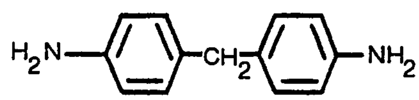

2. Gemisch gemäß Anspruch 1, worin $Ar_2$ den zweiwertigen Rest des folgenden Diamins wiedergibt

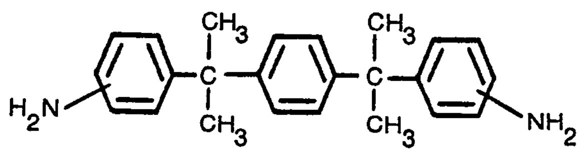

3. Gemisch gemäß Anspruch 2, worin bis zu 50 Molprozent des Diamins durch den zweiwertigen Rest der folgenden Diamine ersetzt sind

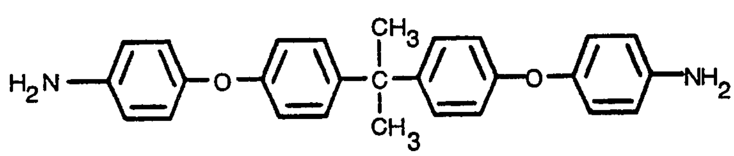

4. Gemisch gemäß Anspruch 1, worin das Poly(aryletherketon) sich wiederholende Einheiten einer oder mehrerer der folgenden Formeln

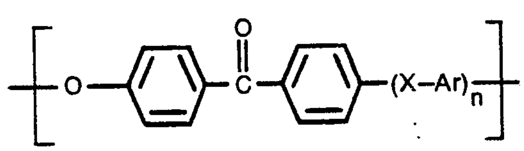

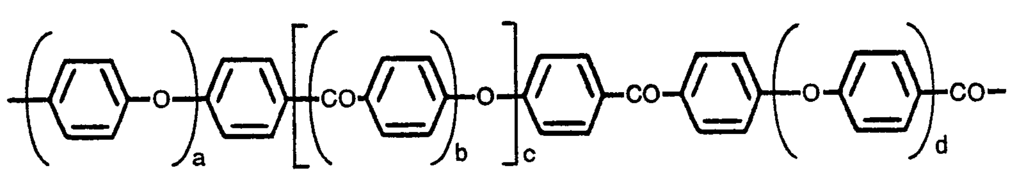

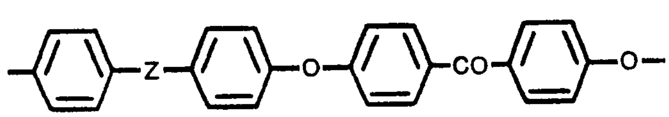

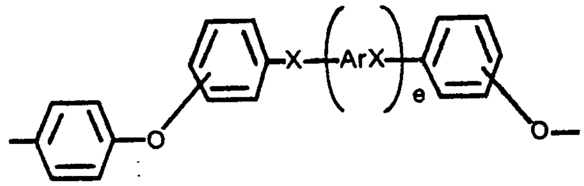

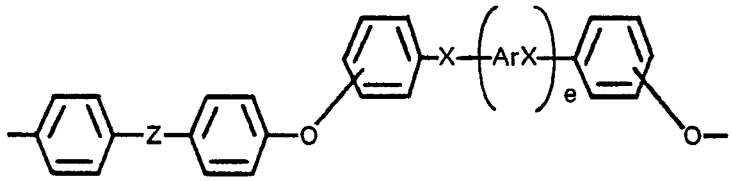

enthält, worin Ar unabhängig einen zweiwertigen aromatischen Rest, ausgewählt unter Phenylen, Diphenylen oder Naphthylen, bedeutet, X unabhängig O, C oder eine direkte Bindung gibt und n eine ganze Zahl von 0 bis 3 ist, b, c, d und e 0 oder 1 sind und a eine ganze Zahl von 1 bis 4 ist und Z Ether, Carbonyl oder

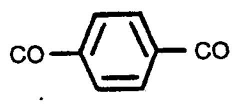

bedeutet.

5. Gemisch gemäß Anspruch 4, worin das Poly(aryletherketon) sich wiederholende Einheiten, ausgewählt unter einer oder mehreren der folgenden, enthält

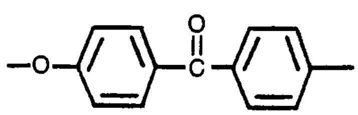

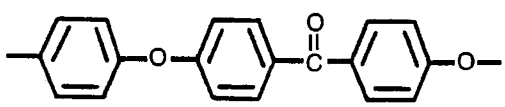

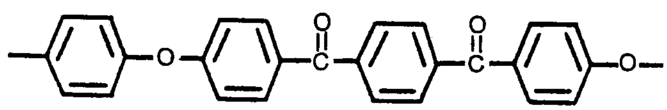

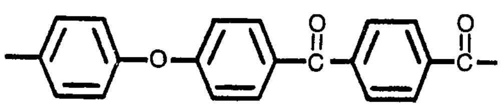

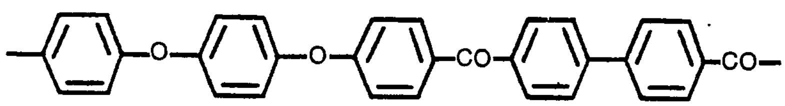

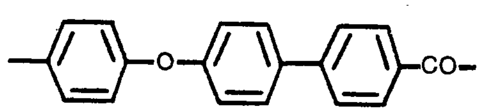

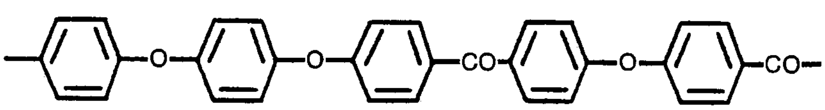

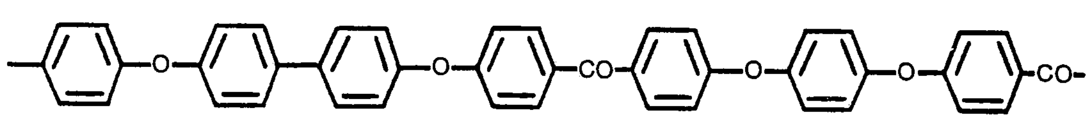

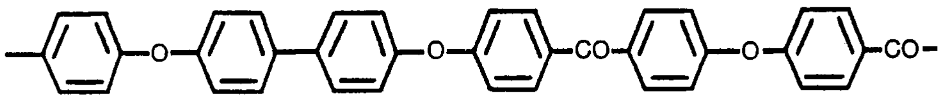

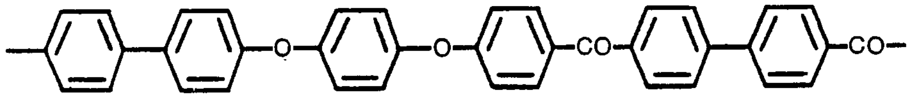

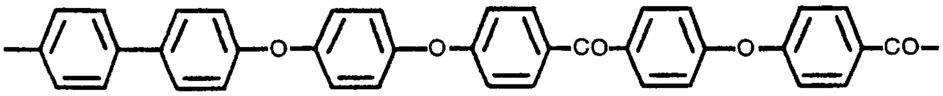

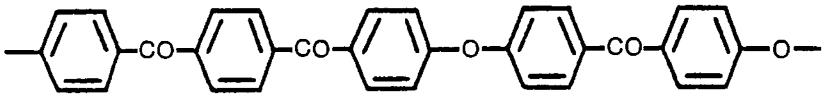

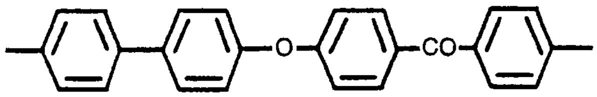

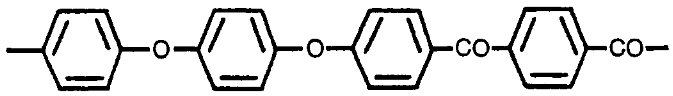

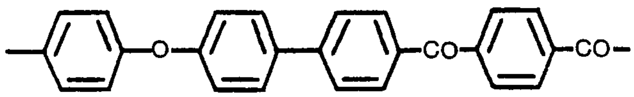

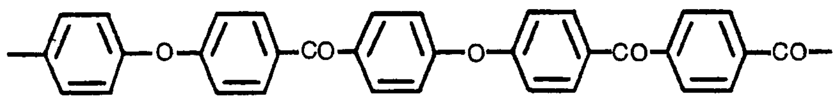

## Revendications

1. Un mélange miscible d'une poly(aryl éther cétone) et d'une polyimide ayant la formule ci-après:

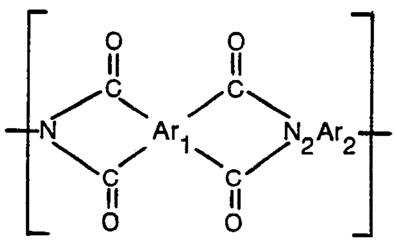

dans laquelle $Ar_1$ est le reste tétravalent de l'un quelconque des dyanhydrides ci-après:

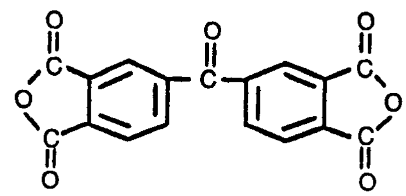

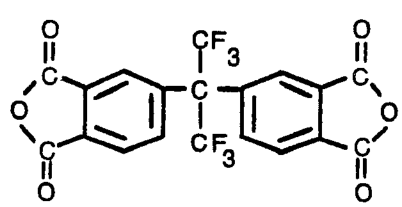

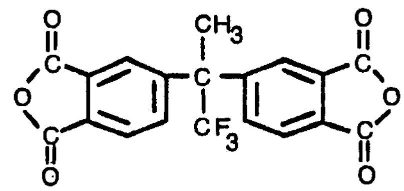

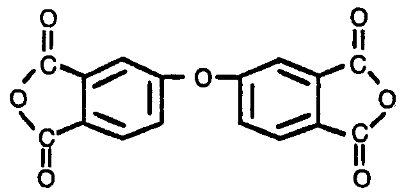

et $Ar_2$ est le reste divalent de la diamine ci-après:

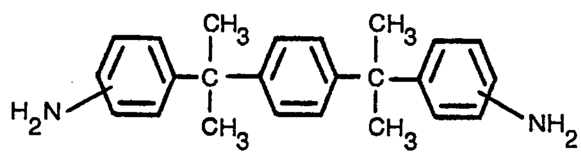

et optionnellement, avec l'une ou plusieurs des diamines suivantes:

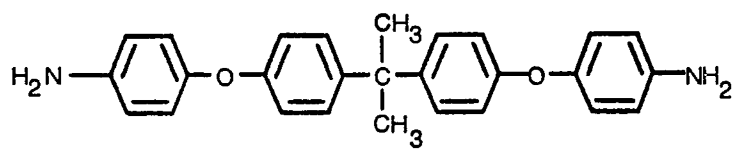

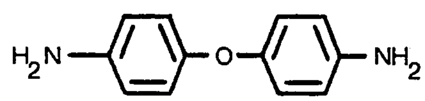

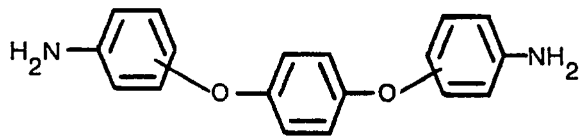

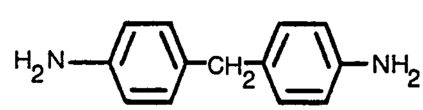

2. Un mélange comme défini dans la revendication 1, dans lequel $Ar_2$ est le reste divalent de la diamine suivante:

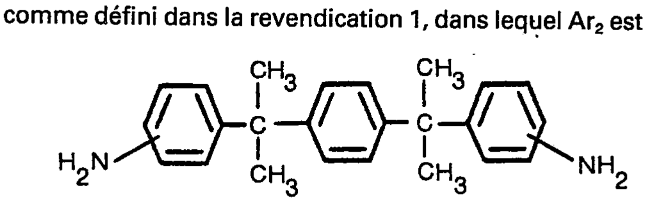

3. Un mélange comme défini dans la revendication 2, dans lequel jusqu'à 50 moles % de la diamine sont remplacés par le reste divalent de la diamine ci-après:

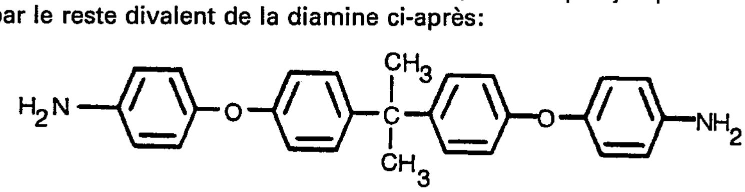

4. Un mélange comme défini dans la revendication 1, dans lequel la poly(aryl éther cétone) contient des unités répétées d'une ou plusieurs des formules ci-après:

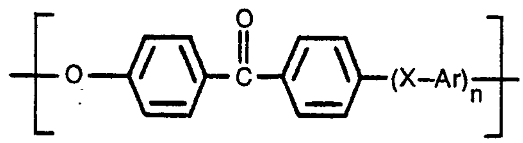

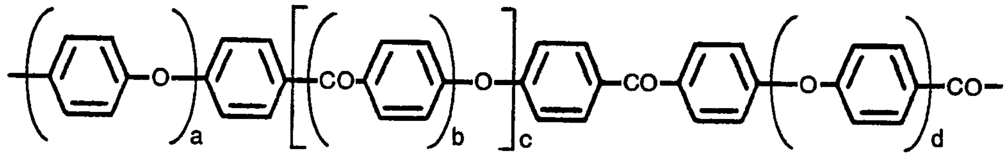

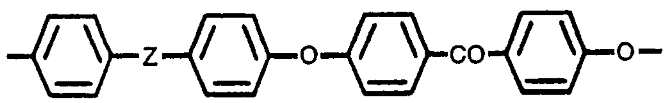

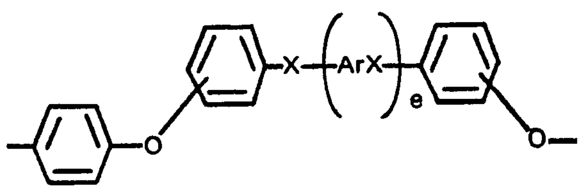

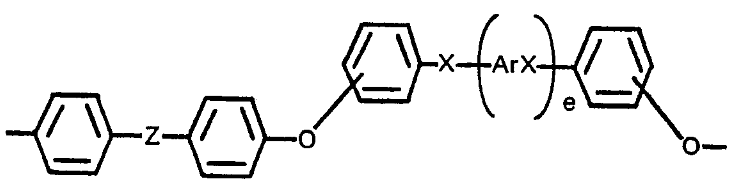

dans laquelle Ar est indépendamment un radical aromatique divalent choisi parmi phénylène, diphénylène ou naphthylène, X est indépendamment O, C ou une liaison directe et n est un nombre entier de 0 à 3, b, c, d et e sont 0 ou 1 et a est un nombre entier de 1 à 4 et Z est éther, carbonyl ou

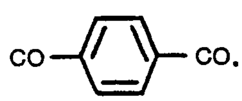

5. Un mélange comme défini dans la revendication 4, dans lequel la poly(aryl éther cétone) contient des unités répétées choisies de l'une ou plusieurs des suivantes: